# EUROPÄISCHE PATENTSCHRIFT

(11) **EP 1 477 701 B1**
(45) Veröffentlichungstag und Bekanntmachung des Hinweises auf die Patenterteilung: **14.11.2007**
(21) Anmeldenummer: 04011371.4
(22) Anmeldetag: 13.05.2004
(51) Int. Cl.: F16F 1/32

(54) **Wellfeder mit stufenweise progressiver Federkennlinie**
Wave spring with stepwise progressive spring characteristics
Ressort ondulé avec caractéristiques progressives par étapes

(30) Priorität: 14.05.2003 DE 10321800
(43) Veröffentlichungstag der Anmeldung: 17.11.2004
(73) Patentinhaber: Muhr und Bender KG, 57439 Attendorn (DE)
(72) Erfinder: Kobelev, Vladimir, Dr.-Ing., 57439 Attendom (DE); Hesselmann, Bernfried, Dr.-Ing., 57482 Wenden (DE); Rinsdorf, Andreas, Dr.-Ing., 57258 Freudenberg (DE)
(74) Vertreter: Neumann, Ernst Dieter

(56) Entgegenhaltungen:
- EP-A- 0 396 755
- FR-A- 935 042
- GB-A- 566 572
- US-A- 4 660 811
- US-A- 4 697 682
- US-A- 5 230 787
- US-A- 5 803 441
- DATABASE WPI Section PQ, Week 198950 Derwent Publications Ltd., London, GB; Class Q63, AN 1989-368839 XP002302322 -& SU 1 483 127 A (KARZHAVIN V V) 30. Mai 1989 (1989-05-30)

## Beschreibung

Die Erfindung betrifft Wellfedern aus einem kreisringförmigen Federband, das über dem Umfang eine um eine Bezugsfläche oszillierende Wellenlinie beschreibt. Solche Wellfedern sind als sogenannte "axiale Wellfedern" zur federnden Aufnahme von axialen Kräften bekannt, wobei die Wellenlinie über dem Umfang relativ zu einer Radialebene oszilliert, die normal zur Ringachse liegt. Hierbei ist in der Regel das Federband ringförmig geschlossen. Ein einfaches Beispiel hierfür sind Federringe nach DIN 137, Form B. Es sind weiter "axial radiale" Wellfedern bekannt, bei denen eine Wellenlinie über dem Umfang relativ zu einer Konusfläche oszilliert. Eine solche Feder ist in der FR 935 042 A dargestellt. Solche Wellfedern sind weiterhin als sogenannte "radiale Wellfedern" bekannt, bei denen das Federband über dem Umfang relativ zu einem Ringzylinder oszilliert, der koaxial zur Ringachse liegt. Wellfedern dieser Art sind in der US 5 230 787, welche als nächstliegend zu dem Gegenstand von Anspruch 3 angesehen wird dargestellt. Wellfedern der genannten Arten haben eine fast lineare Federkennlinie mit konstanter Federrate (Federsteifigkeit).

Dokument SU-A-1483127 wird als nächstliegend zum Gegenstand von Anspruch 2 angesehen.

Aus der GB 566 572 A, welche als nächstliegender Stand der Technik zu dem Gegenstand von Anspruch 1 angesehen wird, sind aus gewelltem Federband hergestellte ringförmige Abstandshalter bekannt, die Wellungen mit maximaler Amplitude und Wellungen relativer Amplitude aufweisen. Die Abstandshalter sollen mittels der Wellungen mit maximaler Amplitude Brems- oder Kupplungsscheiben abstützen. Die Wellungen mit relativer Amplitude sollen im Betrieb nicht in Anlage geraten, sondern außerhalb des geforderten Federweges liegen.

Für besondere Anwendungsfälle sind definiert stufenweise progressive Federkennlinien erwünscht. Dies ist mit bekannten Wellfedern bisher nur durch Aggregation mehrerer Wellfedern mit unterschiedlicher Federkennlinie unter Zwischenschaltung von ebenen Scheiben möglich gewesen.

Hiervon ausgehend ist es die Aufgabe der vorliegenden Erfindung, neuartige Wellfedem bereitzustellen, die eine stufenweise progressive Kennlinie aufweisen.

Die erfindungsgemäße Lösung besteht darin, daß bei den Wellfedern der angegebenen Art die Wellfeder ein ringförmig geschlossenes Federband aufweist und eine stufenweise progressive Kennlinie hat, wobei die Wellenlinie mehrere Maxima untereinander unterschiedlicher Größe und mehrere Minima untereinander unterschiedlicher Größe aufweist, die bei zunehmender Belastung der Wellfeder nacheinander mit den Anlageflächen zur Anlage kommen. Werden Wellfedern dieser Art zwischen zwei gleichförmigen Anlageflächen eingebaut und zunehmend belastet, so kommen sie zunächst mit ihren absoluten Maxima und absoluten Minima in Anlage mit den Anlageflächen. Hierbei weisen sie zunächst eine im wesentlichen lineare Kennlinie mit einer ersten geringeren Federrate (Federsteifigkeit) auf, bis sie mit den nächstgrößeren relativen Maxima und relativen Minima an den Anlageflächen zur Anlage kommen. In diesem Moment ändert sich die Federkennlinie zu einem weiterhin im wesentlichen linearen Verlauf mit deutlich erhöhter Federrate (Federsteifigkeit). Wenn neben den genannten nächstgrößeren relativen Maxima und relativen Minima noch weitere nochmals kleinere relative Maxima und relative Minima vorgesehen sind, kann ein weiterer Abschnitt der Federkennlinie mit linearem Verlauf und abermals vergrößerter Federrate (Federsteifigkeit) verwirklicht werden, die wirksam wird, wenn diese weiteren relativen Maxima und relativen Minima mit den Anlageflächen zur Anlage kommen.

Wie bereits ausgeführt, kann die durch die Bezugsfläche bestimmte Grundform der erfindungsgemäßen Wellfedern im wesentlichen radial, im wesentlichen konisch oder im wesentlichen zylindrisch sein, wobei der erste und der letzte Fall als konische Form mit einem Konuswinkel von 180° bzw. 0° betrachtet werden kann. Die Mantellinien des Federbandes verlaufen im wesentlichen parallel zur jeweiligen Bezugsfläche.

Der Verlauf der Wellenlinien über dem Umfang des Federbandes kann einen harmonischen Verlauf (Schwingung) oder einen unregelmäßigen Verlauf (Schwingung) bilden. Eine sichere Anlage an den Anlageflächen ergibt sich, wenn das Federband zumindest jeweils drei absolute Maxima und drei absolute Minima aufweist.

Weitere bevorzugte Ausführungsformen sind in den Unteransprüchen genannt, auf die hiermit Bezug genommen wird.

Eine erste bevorzugte Verwendung für axiale Wellfedern (Radialausrichtung) bzw. axial-radiale Wellfedern (Konusausrichtung) liegt in der Verwendung als elastische Ausgleichsscheibe in Ventilspielausgleichselementen im Ventiltrieb von Verbrennungskraftmaschinen. Die Ventilspielausgleichselemente werden hierbei als mehrteilige Ventilfederteller aus einem Napf, einem Teller und einer dazwischenliegenden Wellfeder ausgebildet. Hierbei können an jedem Ventilfederteller eine oder mehrere erfindungsgemäßen Wellfedern verwendet werden, wobei eine geschichtete gleichsinnige oder gegensinnige Anordnung von mehreren Wellfedern möglich ist. Im ersten Fall liegen die Wellfedern flächig aufeinander; im zweiten Fall sind Zwischenscheiben zu verwenden, wobei die Wellfedern linienförmig mit den Mantellinien ihrer Minima oder Maxima an den Zwischenscheiben anliegen.

Eine zweite bevorzugte Verwendung für axiale Wellfedern (Radialausrichtung) liegt in der Verwendung als Spielausgleichs- und Dämpfungselement in Lamellenkupplungen von Automatikgetrieben von Kraftfahrzeugen. Hierbei werden eine oder mehrere Wellfedern an einem Ende des Lamellenpaketes der Lamellenkupplungen zum Kuppeln der Gangstufen eingesetzt, also auf der Druckseite oder der Abstützseite des Lamellenpaketes. Auch hierbei ist eine gleichsinnig geschichtete oder gegensinnig geschichtete Anordnung von mehreren Wellfedern möglich.

Ausführungsbeispiele der Erfindung sind in den Zeichnungen dargestellt:
- Figur 1: zeigt eine erfindungsgemäße "axiale" Wellfeder in 3D-Darstellung;
- Figur 2: zeigt die Wellfeder nach Figur 1 zwischen zwei als Scheiben dargestellten Anlageflächen;
- Figur 3: zeigt die Wellfeder nach Figur 2 in Seitenansicht.
- Figur 4: zeigt die Federkennlinie einer Feder nach den Figuren 1 bis 3;
- Figur 5: zeigt die Federrate über dem Weg einer Feder nach den Figuren 1 bis 3.
- Figur 6: zeigt eine erfindungsgemäße "axial-radiale" Wellfeder in 3D-Darstellung;
- Figur 7: zeigt eine erfindungsgemäße "radiale" Wellfeder in 3D-Darstellung.
- Figur 8: zeigt ein Beispiel einer Federkennlinie einer erfindungsgemäßen Wellfeder.

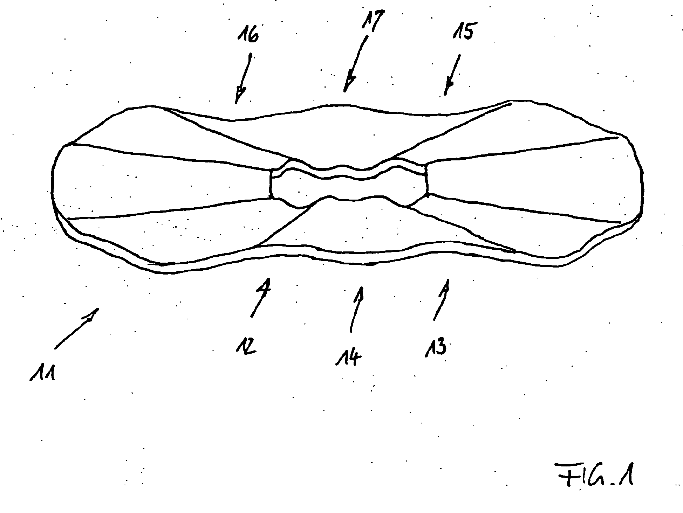

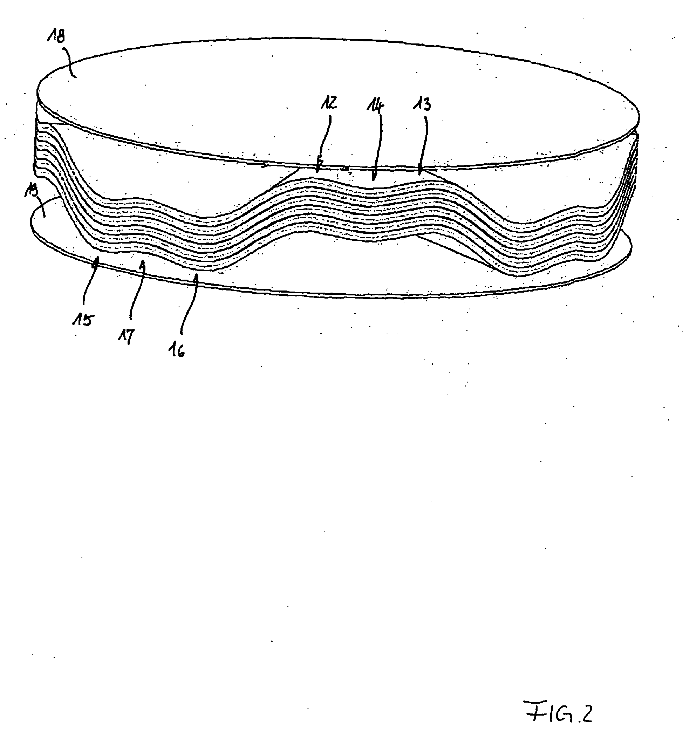

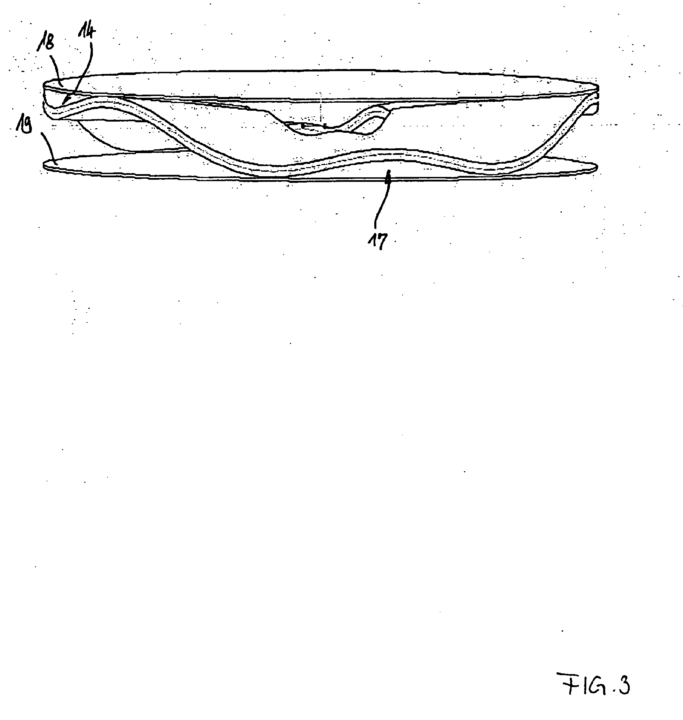

Die Figuren 1 bis 3 werden nachstehend gemeinsam beschrieben.

Die erfindungsgemäße "axiale" Wellfeder besteht aus einem kreisringförmigen Federband 11 mit über dem Umfang gleicher Breite, das ringförmig geschlossen ist. Das Federband 11 ist relativ zu einer normal zur Ringachse liegenden ebenen Radialfläche als Bezugsfläche periodisch gewellt, wobei über dem Umfang drei Perioden zu erkennen sind. Jeweils zwischen zwei absoluten Maxima 12, 13 liegt ein relatives Minimum 14, jeweils zwischen zwei absoluten Minima 15, 16 liegt ein relatives Maximum 17. Im unbelasteten Zustand liegt die erfindungsgemäße axiale Wellfeder mit ihren Mantellinien, die die absoluten Maxima 12, 13 und die absoluten Minima 15, 16 bilden, an den radialen Anlageflächen 18, 19 an, während die dazwischen liegenden relativen Minima 14 und relativen Maxima 17 Abstand von der jeweils entsprechenden Anlagefläche haben. Es ist ohne weiteres nachvollziehbar, daß die axiale Wellfeder einen ersten Federsteifigkeitswert hat, solange das relative Minimum 14 Abstand von der Anlagefläche 19 und das relative Maximum 17 Abstand von der Anlagefläche 18 hat, und daß die Federsteifigkeit sich auf einen zweiten Wert sprungartig verändert, wenn das relative Minimum 14 zur Anlage mit der Anlagefläche 19 und das relative Maximum 17 zur Anlage mit der Anlagefläche 18 kommt.

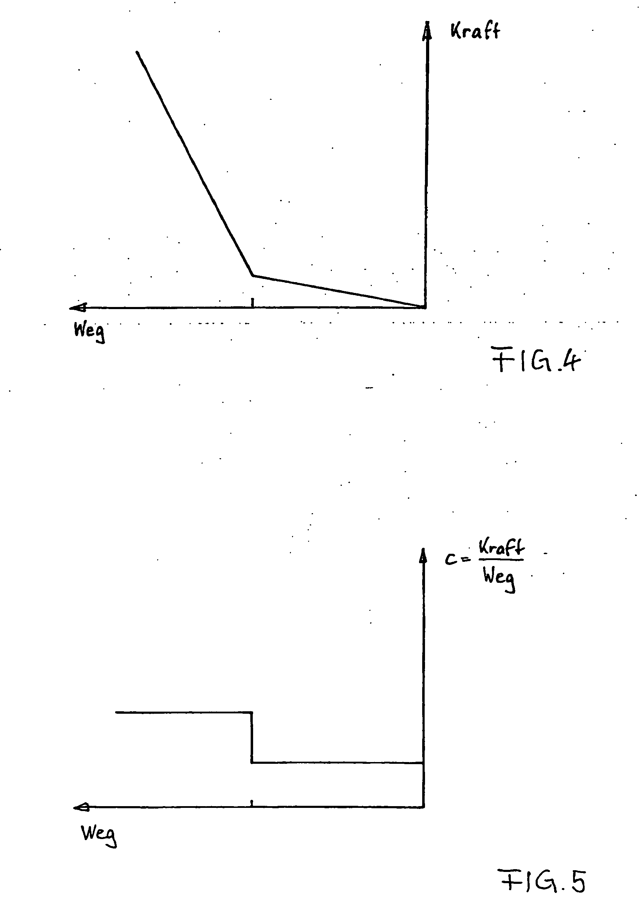

Eine Federkennlinie, die sich hieraus ergibt, ist in Figur 4 dargestellt.

Die Änderung der Federrate (Federsteifigkeit) ist qualitativ in Figur 5 gezeigt. Die Wege sind jeweils als Verkürzung der Wellfeder mit negativem Vorzeichen aufgetragen.

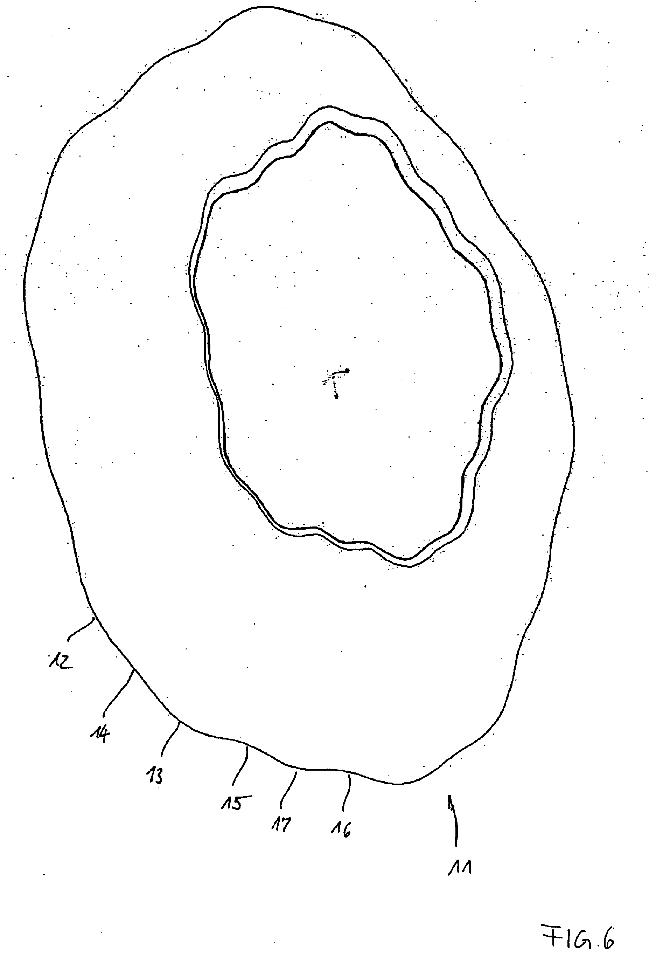

Die erfindungsgemäße "axial-radiale" Wellfeder nach Figur 6 besteht aus einem kreisringförmigen Federband 11 mit über dem Umfang gleicher Breite, das ringförmig geschlossen ist. Das Federband 11 ist relativ zu einer symmetrisch zur Ringachse liegenden Konusfläche als Bezugsfläche periodisch gewellt, wobei über dem Umfang fünf Perioden zu erkennen sind. Jeweils zwischen zwei absoluten Maxima 12, 13 liegt ein relatives Minimum 14, jeweils zwischen zwei absoluten Minima 15, 16 liegt ein relatives Maximum 17. Im unbelasteten Zustand kann die erfindungsgemäße Wellfeder mit den Mantellinien, die den absoluten Maxima 12, 13 und den absoluten Minima 15, 16 entsprechen, an konischen Anlageflächen anliegen, während die dazwischenliegenden relativen Minima 14 und relativen Maxima 17 Abstand von den jeweils entsprechenden hier nicht dargestellten Anlagenflächen haben. Auch hier tritt bei axialer Annäherung der beiden konischen Anlageflächen eine abgestufte Feder steifigkeit auf, die einen ersten geringeren Wert hat, solange die relativen Minima 14 und die relativen Maxima 17 noch Abstand von den Anlageflächen haben, während die Federsteifigkeit sich auf einen zweiten Wert sprungartig verändert, wenn die relativen Minima 14 und relativen Maxima 17 mit den genannten konischen Anlageflächen in Anlage kommen.

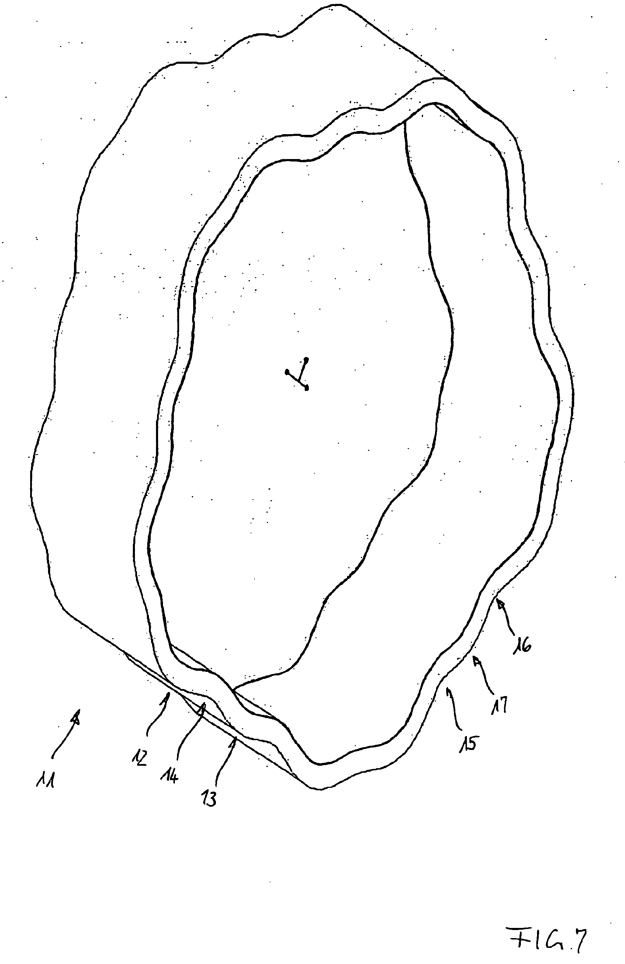

Die erfindungsgemäße "radiale" Wellfeder nach Figur 7 besteht aus einem kreisringförmigen Federband 11 mit über dem Umfang gleicher Breite, das ringförmig geschlossen ist. Das Federband 11 ist relativ zu einer konzentrisch zur Ringachse liegenden Zylinderfläche als Bezugsfläche periodisch gewellt, wobei über dem Umfang fünf Perioden gezeigt sind. Jeweils zwischen zwei absoluten Maxima 12, 13 liegt ein relatives Minimum 14; jeweils zwischen zwei absoluten Minima 15, 16 liegt ein relatives Maximum 17. Die Feder wird zwischen zwei innen- und außenzylindrischen konzentrischen Flächenabschnitten als Distanzelement bzw. Toleranzring montiert, wobei Mantellinien an den absoluten Maxima 12, 13 und den absoluten Minima 15, 16 im unbelasteten Zustand den Kontakt bilden, während die dazwischenliegenden relativen Minima 14 und relativen Maxima 17 Abstand von den entsprechenden zylindrischen Anlageflächen haben. Bei einer radialen Verlagerung des Außenzylinders gegenüber dem Innenzylinder findet zumindest in der Verlagerungsebene eine Verformung der radialen Wellfeder statt, die mit einer ersten geringeren Federsteifigkeit behaftet ist, solange die entsprechenden relativen Minima 14 und relativen Maxima 17 noch Abstand zu ihren zylindrischen Gegenflächen haben, während die Federsteifigkeit sprungartig auf einen zweiten höheren Wert steigt, wenn die relativen Minima 14 und relativen Maxima 17 mit den zylindrischen Gegenflächen zur Anlage kommen.

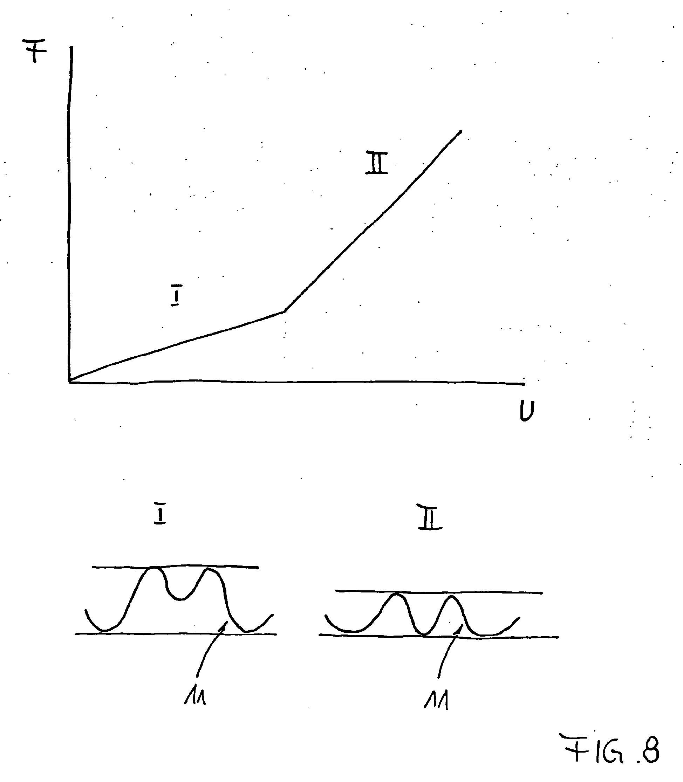

In Figur 8 ist die Federkennlinie einer erfindungsgemäßen Wellfeder gezeigt, bei der die Federkraft F über dem Federweg U stufenweise zunehmende Steigung aufweist. Hierbei sind zwei Abschnitte unterschiedlicher Steigung erkennbar, denen jeweils eine Konfiguration eines Abschnittes einer Wellfeder 11 gemäß der Erfindung zugeordnet ist.

### Bezugszeichenliste

- 11: Federband (ringförmig)
- 12: absolutes Maximum
- 13: absolutes Maximum
- 14: relatives Minimum
- 15: absolutes Minimum
- 16: absolutes Minimum
- 17: relatives Maximum
- 18: Anlagefläche
- 19: Anlagefläche

## Patentansprüche

1. Axiale Wellfeder aus einem kreisringförmigen Federband (11), das über dem Umfang eine um eine radiale Bezugsebene oszillierende Wellenlinie beschreibt, zum Einbau zwischen ebenen radialen Anlageflächen (18, 19),
**dadurch gekennzeichnet,**
**daß** die Wellfeder ein ringförmig geschlossenes Federband (11) aufweist und eine stufenweise progressive Kennlinie hat, wobei die Wellenlinie absolute Maxima (12, 13) und absolute Minima (14, 15) sowie relative Maxima (17) und relative Minima (16) mit voneinander unterschiedlicher Höhe aufweist, die bei zunehmender Belastung der Wellfeder nacheinander mit den Anlageflächen (18, 19) zur Anlage kommen.

2. Axial-radiale Wellfeder aus einem kreisringförmigen Federband, das über dem Umfang eine um eine konische Bezugsfläche oszillierende Wellenlinie beschreibt, zum Einbau zwischen konischen Anlageflächen,
**dadurch gekennzeichnet,**
**daß** die Wellfeder ein ringförmig geschlossenes Federband (11) aufweist und eine stufenweise progressive Kennlinie hat, wobei die Wellenlinie absolute Maxima und absolute Minima sowie relative Maxima und relative Minima mit voneinander unterschiedlicher Höhe aufweist, die bei zunehmender Belastung der Wellfeder nacheinander mit den Anlageflächen zur Anlage kommen.

3. Radiale Wellfeder aus einem zylindrischen Federband, das über dem Umfang eine um eine kreiszylindrische Bezugsfläche oszillierende Wellenlinie beschreibt, zum Einbau zwischen kreiszylindrischen Anlageflächen,
**dadurch gekennzeichnet,**
**daß** die Wellfeder ein ringförmig geschlossenes Federband (11) aufweist, das eine stufenweise progressive Kennlinie hat, wobei die Wellenlinie absolute Maxima und absolute Minima sowie relative Maxima und relative Minima mit voneinander unterschiedlicher Höhe aufweist, die bei zunehmender Belastung der Wellfeder nacheinander mit den Anlageflächen zur Auflage kommen.

4. Wellfeder nach einem der Ansprüche 1 bis 3,
**dadurch gekennzeichnet,**
**daß** die Wellenlinie über dem Umfang mehrere Perioden umfaßt.

5. Wellfeder nach einem der Ansprüche 1 bis 4,
**dadurch gekennzeichnet,**
**daß** die Wellenlinie ausschließlich aus einander überlagerten Sinusverläufen gleicher Phasenlage gebildet ist.

6. Wellfeder nach einem der Ansprüche 1 bis 4,
**dadurch gekennzeichnet,**
**daß** die Wellenlinie ausschließlich aus einander überlagerten Cosinusverläufen gleicher Phasenlage gebildet ist.

7. Wellfeder nach einem der Ansprüche 1 bis 6,
**dadurch gekennzeichnet,**
**daß** das Federband auf dem Umfang geschlitzt ist.

8. Wellfeder nach einem der Ansprüche 1 bis 7,
**dadurch gekennzeichnet,**
**daß** das Federband zumindest einen nicht gewellten Kantenbereich hat.

9. Wellfeder nach einem der Ansprüche 1 bis 8,
**dadurch gekennzeichnet,**
**daß** das Federband zumindest jeweils drei absolute Maxima und drei absolute Minima aufweist.

10. Verwendung von Wellfedern nach einem der Ansprüche 1 und 2 sowie 4 bis 9 als elastische Ausgleichsscheibe in einem mechanischen Ventilspielausgleichselement zur Überbrückung des Ventilsspiels in einer Brennkraftmaschine.

11. Verwendung von Wellfedern nach einem der Ansprüche 1 und 2 sowie 4 bis 9 als ausgleichendes Federelement innerhalb von Lamellenkupplungen von Automatikgetrieben von Kraftfahrzeugen.

12. Verwendung von Wellfedern nach einem der Ansprüche 10 oder 11,
**dadurch gekennzeichnet,**
**daß** mehrere Wellfedern gleichsinnig geschichtet montiert sind.

13. Verwendung von Wellfedern nach einem der Ansprüche 10 oder 11,
**dadurch gekennzeichnet,**
**daß** mehrere Wellfedern abwechselnd gegensinnig geschichtet montiert sind.

14. Verwendung von Wellfedern nach Anspruch 13,
**dadurch gekennzeichnet,**
**daß** jeweils zwischen zwei Wellfedern eine ebene Scheibe liegt.

## Claims

1. An axial ondular spring consisting of a circular-annular spring band (11) which, around its circumference, describes an ondular line oscillating around a radial reference plane and which is provided for the purpose of being fitted between planar radial contact faces (18, 19),
**characterised in**
**that** the ondular spring comprises an annularly closed spring band (11) and a characteristic curve which progresses in steps, wherein the ondular line comprises absolute maxima (12, 13) and absolute minima (14, 15) as well as relative maxima (17) and relative minima (16) of different heights, which, as the load on the ondular spring increases, come into contact one after the other with the contact faces (18, 19).

2. An axial-radial ondular spring consisting of a circular-annular spring band which, around its circumference, describes an ondular line oscillating around a conical reference face and which is provided for the purpose of being fitted between conical contact faces,
**characterised in**
**that** the ondular spring comprises an annularly closed spring band (11) and a characteristic curve which progresses in steps, wherein the ondular line comprises absolute maxima and absolute minima as well as relative maxima and relative minima of different heights, which, as the load on the ondular spring increases, come into contact one after the other with the contact faces.

3. A radial ondular spring consisting of a cylindrical spring band which, around its circumference, describes an ondular line oscillating around a circular-cylindrical reference face and which has been provided for being fitted between circular-cylindrical contact faces,
**characterised in**
**that** the ondular spring comprises an annularly closed spring band (11) which comprises a characteristic curve which progresses in steps, wherein the ondular line comprises absolute maxima and absolute minima as well as relative maxima and relative minima of different heights, which, as the load on the ondular spring increases, come to rest on the contact faces one after the other.

4. An ondular spring according to any one of claims 1 to 3,
**characterised in**
**that** the ondular line comprises a plurality of periods around its circumference.

5. An ondular spring according to any one of claims 1 to 4,
**characterised in**
**that** the ondular line is formed entirely by sinus curves of identical phase positions superimposed on one another.

6. An ondular spring according to any one of claims 1 to 4,
**characterised in**
**that** the ondular line is formed entirely by cosine curves of identical phase positions superimposed on one another.

7. An ondular spring according to any one of claims 1 to 6,
**characterised in**
**that** the spring band is slotted on its circumference.

8. An ondular spring according to any one of claims 1 to 7,
**characterised in**
**that** the spring band comprises at least one edge region which is not ondular.

9. An ondular spring according to any one of claims 1 to 8,
**characterised in**
**that** the spring band comprises at least three absolute maxima and three absolute minima.

10. The use of ondular springs according to any one of claims 1 and 2 as well as 4 to 9 as compensating discs in a mechanical valve play compensating element for bridging the valve play in an internal combustion engine.

11. The use of ondular springs according to any one of claims 1 and 2 as well as 4 to 9 as compensating spring elements inside multi-plate couplings of automatic gearboxes of motor vehicles.

12. The use of ondular springs according to any one of claims 10 or 11,
**characterised in**
**that** several ondular springs are fitted so as to be layered with the same orientation.

13. Using ondular springs according to any one of claims 10 or 11,
**characterised in**
**that** several springs are fitted so as to be layered alternately with opposite orientations.

14. Using ondular springs according to claim 13,
**characterised in**
**that** between each two ondular springs there is arranged a planar disc.

## Revendications

1. Ressort ondulé axial en une bande de feuillard à ressort (11) de forme annulaire circulaire, qui décrit le long de la périphérie une ligne ondulée oscillant autour d'un plan de référence radial, et destiné à être monté entre des surfaces d'appui radiales (18, 19) planes,
**caractérisé en ce que** le ressort ondulé présente une bande de feuillard à ressort (11) fermée selon une forme annulaire et possède une courbe caractéristique progressive par paliers, la ligne ondulée présentant des maximas absolus (12, 13) et des minimas absolus (14, 15) ainsi que des maximas relatifs (17) et des minimas relatifs (16) de hauteur différente les uns des autres, et qui, pour une charge ou une sollicitation croissante du ressort ondulé, viennent s'appuyer successivement sur les surfaces d'appui (18, 19).

2. Ressort ondulé axial-radial en une bande de feuillard à ressort de forme annulaire circulaire, qui décrit le long de la périphérie une ligne ondulée oscillant autour d'une surface de référence conique, et destiné à être monté entre des surfaces d'appui coniques,
**caractérisé en ce que** le ressort ondulé présente une bande de feuillard à ressort (11) fermée selon une forme annulaire et possède une courbe caractéristique progressive par paliers, la ligne ondulée présentant des maximas absolus et des minimas absolus, ainsi que des maximas relatifs et des minimas relatifs de hauteur différente les uns des autres, et qui, pour une charge ou une sollicitation croissante du ressort ondulé, viennent s'appuyer successivement sur les surfaces d'appui.

3. Ressort ondulé radial en une bande cylindrique de feuillard à ressort, qui décrit le long de la périphérie une ligne ondulée oscillant autour d'une surface de référence cylindrique circulaire, et destiné à être monté entre des surfaces cylindriques circulaires,
**caractérisé en ce que** le ressort ondulé présente une bande de feuillard à ressort (11) fermée selon une forme annulaire, qui possède une courbe caractéristique progressive par paliers, la ligne ondulée présentant des maximas absolus et des minimas absolus, ainsi que des maximas relatifs et des minimas relatifs de hauteur différente les uns des autres, et qui, pour une charge ou une sollicitation croissante du ressort ondulé, viennent s'appliquer successivement sur les surfaces d'appui.

4. Ressort ondulé selon l'une des revendications 1 à 3,
**caractérisé en ce que** la ligne ondulée englobe plusieurs périodes le long de la périphérie.

5. Ressort ondulé selon l'une des revendications 1 à 4,
**caractérisé en ce que** la ligne ondulée est exclusivement formée de courbes sinus superposées, de même phase.

6. Ressort ondulé selon l'une des revendications 1 à 4,
**caractérisé en ce que** la ligne ondulée est exclusivement formée de courbes cosinus superposées, de même phase.

7. Ressort ondulé selon l'une des revendications 1 à 6,
**caractérisé en ce que** la bande de feuillard à ressort est fendue sur la périphérie.

8. Ressort ondulé selon l'une des revendications 1 à 7,
**caractérisé en ce que** la bande de feuillard à ressort présente au moins une zone de bordure non ondulée.

9. Ressort ondulé selon l'une des revendications 1 à 8,
**caractérisé en ce que** la bande de feuillard à ressort présente au moins respectivement trois maximas absolus et trois minimas absolus.

10. Utilisation de ressorts ondulés selon l'une des revendications 1 et 2 ainsi que 4 à 9, en tant que rondelle de compensation élastique dans un élément mécanique de compensation de jeu de soupape, pour combler le jeu de soupape dans un moteur à combustion interne.

11. Utilisation de ressorts ondulés selon l'une des revendications 1 et 2 ainsi que 4 à 9, en tant qu'élément de ressort de compensation à l'intérieur d'embrayages ou d'accouplements à disques de transmissions ou boites de vitesses automatiques de véhicules automobiles.

12. Utilisation de ressorts ondulés, selon l'une des revendications 10 ou 11,
**caractérisée en ce que** plusieurs ressorts ondulés sont montés en étant empilés dans le même sens.

13. Utilisation de ressorts ondulés, selon l'une des revendications 10 ou 11,
**caractérisée en ce que** plusieurs ressorts ondulés sont montés en étant empilés alternativement en sens opposé.

14. Utilisation de ressorts ondulés, selon la revendication 13,
**caractérisée en ce qu'**entre à chaque fois deux ressorts ondulés est placée une rondelle plane.
